# EUROPÄISCHE PATENTSCHRIFT

(11) **EP 0 879 543 B1**
(45) Veröffentlichungstag und Bekanntmachung des Hinweises auf die Patenterteilung: **19.05.2004**
(21) Anmeldenummer: 97917217.8
(22) Anmeldetag: 30.01.1997
(51) Int. Cl.: H04Q 7/38, H04Q 7/22

(54) **VERFAHREN ZUR HERSTELLUNG EINER SPRACHVERBINDUNG IN EINEM MOBILFUNKNETZ**
METHOD FOR ESTABLISHING A VOICE LINK IN A MOBILE NETWORK
PROCEDE D'ETABLISSEMENT D'UNE LIAISON TELEPHONIQUE DANS UN RESEAU MOBILE

(30) Priorität: 08.02.1996 DE 19606304
(43) Veröffentlichungstag der Anmeldung: 25.11.1998
(73) Patentinhaber: ATX Europe GmbH, 40547 Düsseldorf (DE)
(72) Erfinder: JUNGEMANN, Matthias, D-52064 Aachen (DE); HEIMANN, Josef, D-40629 Düsseldorf (DE); SCHULZ, Werner, D-40670 Meerbusch (DE); HÖSL, Astrid, D-45219 Essen (DE)
(74) Vertreter: Meissner, Peter E., Dipl.-Ing.
(86) Internationale Anmeldenummer: PCT/DE1997/000236
(87) Internationale Veröffentlichungsnummer: WO 1997/029609

(56) Entgegenhaltungen:
- WO-A-94/28687
- ITG-FACHBERICHTE, Nr. 124, 1.September 1993, Seiten 517-526, XP000443970 HIENTZ M ET AL: "DER SHORT MESSAGE SERVICE EIN NEUER DIENST DER DIGITALEN MOBILKOMMUNIKATION"

## Beschreibung

Die Erfindung betrifft ein Verfahren zur Herstellung einer Sprachverbindung zwischen einem Teilnehmer eines Mobilfunknetzes, insbesondere einem Teilnehmer mit eingeschränkter Subskription, und einem Gesprächspartner auf dem Sprachkanal eines mobilen Endgerätes, wobei das Endgerät über einen zusätzlichen Datenkanal für die Übermittlung digitaler Daten verfügt oder an ein Zusatzgerät mit einem solchen Datenkanal angeschlossen ist, wobei die für den Gesprächsaufbau erforderlichen Daten über den zentralen Datenkanal übermittelt werden.

Ein derartiges Verfahren ist aus der WO-A-94/28687 bekannt.

Telefon- und Mobilfunkdienstleistungen werden im Regelfall entsprechend der Inanspruchnahme durch den jeweiligen Teilnehmer des Telefon- bzw. Mobilfunknetzes abgerechnet. Hierzu werden die Gesprächseinheiten der abgehenden, d. h. durch den Teilnehmer selbst ausgelösten Gespräche ermittelt und dem Teilnehmer belastet. Der angerufene Gesprächspartner zahlt im Regelfall keine Gesprächseinheiten. Seine Erreichbarkeit über sein Mobilfunktelefon ist mit der Zahlung einer Grundgebühr abgegolten. Das System eines Mobilfunknetzes basiert im wesentlichen auf einem Gleichgewicht von abgehenden und eingehenden Anrufen.

Im Rahmen von speziellen Dienstleistungen, die unter Nutzung eines Mobilfunknetzes erbracht werden, kann es zu erheblichen Ungteichgewichten zwischen abgehenden und eingehenden Anrufen im Vergleich zu einer normalen Telefonnutzung kommen. Ein typisches Beispiel hierfür ist ein Notrufsystem. Ein solches System wird vergleichsweise extrem selten benutzt und stets nur durch den jeweiligen Teilnehmer ausgelöst. Eine ständige Erreichbarkeit des Teilnehmers, die durch eine in Relation zur Nutrungshäufigkeit sehr teuer erscheinende "normale" Grundgebühr abzugelten wäre, ist hierbei gar nicht notwendig. Der Teilnehmer selbst ist daher für andere Gesprächspartner nicht anwählbar und verbraucht infolge des seltenen Eintretens von Notfällen nur sehr wenige Gesprächseinheiten. Im Gegenzug zur Berechnung vergleichsweise teurer Gesprächseinheiten in einem Notfall können dem Teilnehmer aber sehr niedrige Grundgebühren berechnet werden. Der Teilnehmer verfügt nur über eine eingeschränkte Subskription im Mobilfunknetz, ist also für andere Gesprächspartner über den Sprachkanal nicht erreichbar. Auch der Teilnehmer selbst kann im Rahmen einer solchen Anwendung gehindert sein, außer seiner Notrufzentrale eine Rufnummer eines anderen Gesprächspartners anwählen zu können. Dies kann gerätetechnisch auch bei Verwendung eines normalen Mobilfunktelefons mit vollständiger Tastatur z. B. dadurch erreicht werden, daß die zum Betrieb des Mobilfunktelefons erforderliche SIM-Karte des Teilnehmers einen Eintrag enthält, der nur das Anwählen z. B. einer einzigen vorgegebenen Telefonnummer ermöglicht. Es kann aber auch vorgesehen sein, daß dem Teilnehmer lediglich ein Einzweckgerät zur Verfügung gestellt wird, bei dem der Notruf durch Betätigen einer einzelnen Notruftaste ausgelöst wird.

Neben Notrufsystemen für ärztliche oder polizeiliche Hilfsleistungen gibt es eine Reihe weiterer Dienstleistungen (z. B. Pannenhilfsdienste), bei denen für die Durchführung dieser Dienste eine eingeschränkte Subskription des jeweiligen Teilnehmers im Mobilfunknetz völlig ausreichend ist. Dennoch besteht vielfach der Wunsch, die dem Teilnehmer zur Verfügung stehenden Kommunikationsmittel des Mobilfunktelefons im Bedarfsfall auch über die an sich nur vorgesehenen beschränkten Nutzungshandlungen im Rahmen der jeweiligen Dienstleistung hinaus auch für Gespräche mit beliebigen anderen Gesprächspartnem nutzen zu können. Dies kann entweder die Erreichbarkeit für andere Gesprächspartner oder das Anwählen an sich nicht erlaubter Gesprächspartner oder auch beides bedeuten.

Aufgabe der Erfindung ist es daher, ein Verfahren der eingangs genannten Art dahingehend weiterzubilden, daß insbesondere im Falle einer eingeschränkten Subskription eines Teilnehmers eines Mobilfunknetzes bei Bedarf eine erweiterte Nutzung des Mobilfunktelefons ermöglicht wird.

Gelöst wird diese Aufgabe bei einem Verfahren der eingangs genannten Art durch die im Kennzeichen des Anspruchs 1 angegebenen Merkmale.

Der Gesprächsaufbau erfolgt dabei über einen Kontrollrechner, der mit dem Endgerät verbunden ist, indem eine über den Datenkanal erhaltene Rufnummer vom Kontrollrechner selbsttätig angewählt wird.

Für den Fall, daß der Teilnehmer selbst für andere Gesprächspartner über den Sprachkanal des Mobilfunknetzes nicht erreichbar ist, sieht die Erfindung vor, daß der Teilnehmer eine Datenmitteilung über den zusätzlichen Datenkanal erhält, die die Rufnummer des "anrufenden" Gesprächspartners enthält, so daß der Kontrollrechner selbsttätig diese Rufnummer anwählen kann, um die Gesprächsverbindung im Sprachkanal herzustellen. Es empfiehlt sich, das selbsttätige Anwählen durch den Kontrollrechner erst dann durchführen zu lassen, wenn der Teilnehmer eine entsprechende Bestätigung gegeben hat, daß das Anwählen tatsächlich erfolgen soll. Er hat damit also eine Möglichkeit, unerwünschte Anrufe zu vermeiden. Zweckmäßigerweise findet die Übermittlung der Daten für den Gesprächsaufbau über den SMS-Kanal (short message service) des Mobilfunknetzes statt, der für den Versand von Kurznachrichten verwendet wird. Dies ist jedoch keineswegs zwingend erforderlich. Es kann ebenso vorgesehen sein, daß z. B. ein Zusatzgerät (Datenfunkendgerät) verwendet wird, das auf einem zusätzlichen Datenkanal arbeitet und an das Endgerät des Mobilfunknetzes angeschlossen ist. Für den Fall, daß vom Teilnehmer lediglich Datenmitteilungen für den Gesprächsverbindungsaufbau empfangen werden sollen, können beispielsweise auch Endgeräte eines Paging-Dienstes verwendet werden.

Die vorliegende Erfindung läßt sich aber auch dann vorteilhaft nutzen, wenn der Teilnehmer des Mobilfunknetzes keinen Einschränkungen hinsichtlich seiner Subskription unterliegt. So ist es beispielsweise möglich, eine Telefonnummemauskunft auf eine sehr komfortable Weise zu nutzen. Die Anfrage nach einer Telefonnummer eines gewünschten Gesprächsteilnehmers kann dabei über z. B. den SMS-Kanal oder aber auch über den Sprachkanal an die Telefonnummem-Auskunftzentrale übermittelt werden. Die Rückantwort wird dann als Datenmitteilung über den Datenkanal an den Kontrollrechner des Teilnehmers geschickt, so daß der Kontrollrechner von sich aus die gewünschte Telefonnummer anwählen und die Verbindung herstellen kann.

Erläutert sei, dass in gerätetechnischer Hinsicht für die Durchführung des erfindungsgemäßen Verfahrens ein Mobilfunktelefon vorgesehen ist, das mindestens eine Taste zur Dateneingabe durch den Teilnehmer aufweist und Zugang zu einem separaten Datenkanal hat (vorzugsweise SMS-Kanal des Mobilfunknetzes). Ferner weist die Einrichtung einen Kontrollrechner auf, der zweckmäßig als Bestandteil des Mobilfunktelefons ausgebildet ist, aber auch eine separates Gerät darstellen kann. Dieser Kontrollrechner besitzt eine Schnittstelle zum Mobilfunktelefon, die so eingerichtet ist, daß Tastatureingaben des Mobilfunktelefons erkannt und/oder die Wählfunktion für den Sprachverbindungsaufbau des Mobilfunktelefons ausgelöst werden kann. Darüber hinaus besitzt der Kontrollrechner eine Schnittstelle zum separaten Datenkanal. Für den Fall, daß der Teilnehmer im Rahmen seiner eingeschränkten Subskription für das Mobilfunknetz lediglich seine Anrufbarkeit durch andere Gesprächsteilnehmer sicherstellen möchte, reicht ein unidirektionaler Datenkanal eines Funknetzes (z. B. Paging-Netz) völlig aus. Zur Vollnutzung der Möglichkeiten, die die vortiegende Erfindung bietet, ist allerdings ein bidirektionaler Datenkanal für die Datenübermittlung erforderlich. Um im Bedarfsfall auch Daten über den aktuellen Aufenthaltsort des Teilnehmers automatisch übermitteln zu können, ist es ferner von Vorteil, den Kontrollrechner datentechnisch mit einer in einem Fahrzeug, in dem sich der Teilnehmer befindet, mitgeführten Navigationseinrichtung zu verbinden.

Wesentliches Merkmal der Erfindung ist es, daß die für den Verbindungsaufbau im Gesprächskanal erforderlichen Daten über den separaten Datenkanal übermittelt werden. Dabei kann je nach Anwendungsfall die Übermittlung in Richtung auf den Teilnehmer mit eingeschränkter Subskription erfolgen oder aber auch in umgekehrter Richtung von diesem ausgehen. Die für den Gesprächsaufbau erforderlichen Daten werden durch einen Kotrollrechner zusammengestellt und übermittelt oder von diesem aufgenommen und für den Verbindungsaufbau verarbeitet.

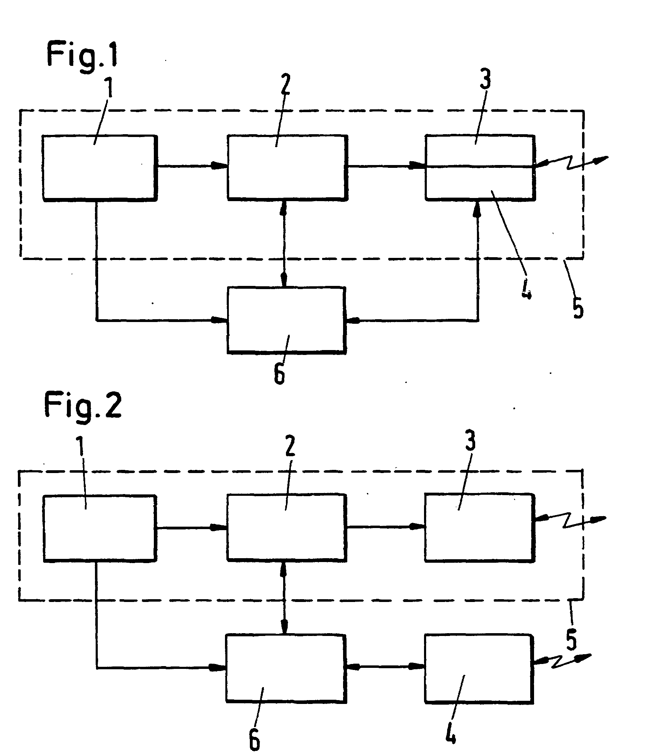

Die Erfindung wird nachfolgend anhand der Zeichnung näher erläutert. Die Fig. 1 und 2 zeigen jeweils in Form eines Funktionsschemas zwei unterschiedliche Ausführungsformen von Einrichtung, mit denen das Vefahren durchgeführt werden kann.

In Fig. 1 wird durch den gestrichelten Rahmen die gerätetechnische Einheit eines Mobilfunktelefons 5 hervorgehoben. Dieses Mobilfunktelefon 5 weist eine Tastatur 1 sowie eine Wähleinrichtung 2 auf. Über die Wähleinrichtung 2 können ein Sprachkanal 3 in einem GSM-Mobilfunknetz und ein Datenkanal 4 (SMS-Kanal) zur Herstellung von Kommunikationsverbindungen angesprochen werden. Weiterhin ist ein Kontrollrechner 6 vorgesehen, der nicht nur eine Schnittstelle zum Datenkanal 4 sondern auch jeweils eine Schnittstelle zur Erkennung von Tastatureingaben über die Tastatur 1 und zur Wähleinrichtung 2 aufweist. Im vorliegenden Fall ist der Kontrollrechner 6 als separates Zusatzgerät angeordnet. Er könnte aber auch unmittelbar integraler Bestandteil des Mobilfunktelefons 5 sein.

In Fig. 2 ist eine Einrichtung dargestellt, die gegenüber der Ausführungsform in Fig. 1 dahingehend abgewandelt wurde, daß der zusätzliche Datenkanal 4 nicht mehr unmittelbar Teil des benutzten Mobilfunknetzes ist, sondern ein Datenkanal eines separaten Datenfunknetzes ist. Dieser Datenkanal 4 ist für den Kontrollrechner 6 über ein entsprechendes Endgerät des Datenfunknetzes zugänglich.

Die in Fig. 1 und Fig. 2 dargestellten Einrichtungen lassen sich in unterschiedlichster Weise sowohl von Mobilfunkteilnehmem mit eingeschränkter Subskription als auch mit uneingeschränkter Subskription nutzen. Im Falle einer nichteingeschränkten Subskription läßt sich beispielsweise in der vorstehend bereits beschriebenen Weise automatisch eine Rufnummer eines Gesprächspartners anwählen, die von einer Telefonnummem-Auskunftzentrale als Datenmitteilung über den Datenkanal 4 empfangen wurde.

Im Rahmen etwa eines Pannenhilfsdienstes läßt sich die Erfindung beispielsweise von einem Teilnehmer mit eingeschränkter Subskription, der über keine normale Telefontastatur verfügt, wie folgt nutzen:
Über die Betätigung einer Pannenruftaste (Tastatur 1), die die Wähleinrichtung 2 zum Anwählen der vorprogrammierten Rufnummer einer Pannenhilfszentrale veranlaßt, wird eine Gesprächsverbindung über den Sprachkanal 3 zwischen dem Teilnehmer und der Pannenhilfszentrale hergestellt. Nach Erklärung der näheren Umstände (Art der Panne, Aufenthaltsort des Teilnehmers usw.) kann von der Pannenhilfszentrale über den Datenkanal 4 eine Datenmitteilung an das Endgerät (Mobilfunktelefon 5) geschickt werden, in der die Rufnummer eines Hilfsdienstes enthalten ist, der in der Nähe des aktuellen Aufenthaltsortes des Teilnehmers ansässig ist und für eine schnelle Dienstleistung zur Verfügung steht. Der Kontrollrechner 6 ist nun in der Lage, anhand der über den Datenkanal 4 übermittelten Rufnummer diesen örtlichen Hilfsdienst unmittelbar anzuwählen, um die weiteren Bedingungen für die angeforderte Hilfsleistung absprechen zu können. Da das Mobilfunktelefon 5 lediglich über die Einzwecktaste "Pannenhilfsruf" verfügte, wäre eine manuelle Anwahl eines solchen Hilfsdienstes über das Mobilfunktelefon 5 für den Teilnehmer sonst nicht möglich gewesen.

Für Teilnehmer mit uneingeschränkter Subskription, insbesondere aber für Teilnehmer mit eingeschränkter Subskription, die nicht beliebige Gesprächspartner direkt anrufen können, läßt sich die Einrichtung auch dadurch vorteilhaft nutzen, daß über diese Einrichtung eine Gesprächsverbindung mit einem Gesprächspartner aufgebaut werden kann, die im Sinne eines telefonischen Rückrufs zustande kommt Hierzu versendet der Teilnehmer unter Benutzung der normalen Tastatur 1 des Mobilfunktelefons 5 durch den Kontrollrechner 6 über den Datenkanal 4 eine Datenmitteilung an den gewünschten Gesprächspartner, der möglicherweise sogar in einem anderen Mobilfunknetz erreichbar ist als der Teilnehmer. Diese Datenmitteilung enthält alle Informationen, um den gewünschten Rückruf des Gesprächspartners zu ermöglichen. Die Übermittlung der Daten für die Initiierung des Rückrufs kann dabei auf direktem Wege oder insbesondere bei eingeschränkter Subskription über eine Servicezentrale vorgenommen werden, die die Weiterleitung an den jeweiligen Gesprächspartner übernimmt oder selbst die Sprachverbindung im Sinne der bereits beschriebenen Verbindurtgsmaklertätigkeit herstellt. Hierfür können dann dem Teilnehmer mit der eingeschränkten Subskription entsprechende Gebühren in Rechnung gestellt werden, wobei diese allerdings unabhängig vom Umfang des erfolgten Rückrufs sind.

Im umgekehrten Fall, wenn die Einschränkung der Subskription des Teilnehmers darin besteht, daß er für andere Gesprächspartner nicht über den Gesprächskanal erreichbar ist, kann folgender Ablauf vorgesehen sein:
Der Wunsch eines Gesprächspartners nach Führung eines Telefongesprächs mit dem Teilnehmer kann von dem Gesprächspartner z. B. an eine Servicezentrale gerichtet werden. Die Servicezentrale schickt z. B. über den SMS-Kanal eine Datenmitteilung an den Teilnehmer, wobei aus der Datenmitteilung hervorgeht, unter welcher Rufnummer der Gesprächspartner erreichbar ist. Der Kontrollrechner 6 analysiert diese über den Datenkanal 4 erhaltene Mitteilung und wählt (gegebenenfalls nach entsprechender Freigabe durch den Teilnehmer) selbsttätig die ihm übermittelte Rufnummer des Gesprächspartners an und stellt so die Sprachverbindung her.

Eine sehr sinnvolle Nutzung ist auch im Rahmen von ärztlichen oder polizeilichen Notrufsystemen möglich, wenn die zur Hilfsleistung vorgesehenen Dienststellen regional jeweils unterschiedliche Rufnummern haben. In einem solchen Falle kann eine übergeordnete Notrufzentrale z. B. durch Betätigung eines speziellen Rufknopfes im Wege einer Datenmitteilung über den Datenkanal angesprochen werden, wobei diese vom Kontrollrechner 6 zusammengestellte Datenmitteilung nicht nur die Rufnummer des Mobilfunktelefons 5 sondern darüber hinaus auch eine Information über die aktuelle Region enthält, in der sich der Teilnehmer gerade aufhält. Eine entsprechende Ortsinförmation kann dem Kontrollrechner beispielsweise durch eine Navigationseinrichtung eines Fahrzeugs, in dem sich der Teilnehmer befindet, über eine entsprechende Datenverbindung zur Verfügung gestellt werden. Die übergeordnete Notrufzentrale übernimmt hierbei lediglich die Aufgabe, wiederum eine Datenmitteilung an den anrufenden Teilnehmer über den Datenkanal 4 zurückzuschicken, in der die Rufnummer des regional zuständigen Hilfsdienstes enthalten ist. Nach Erhalt dieser Antwort über den Datenkanal 4 wählt der Kontrollrechner 6 diese Rufnummer automatisch an und stellt die Sprachverbindung zum zuständigen Hilfsdienst her. Bei dieser Lösung merkt der Teilnehmer selbst überhaupt nicht, daß er mit einer übergeordneten Notrufzentrale Daten ausgetauscht hat, um die letztlich von ihm gewünschte Verbindung zum örtlichen Hilfsdienst herzustellen. Auf diese Art und Weise lassen sich auch bei Verwendung normaler vollständiger Telefontastaturen Vereinheitlichungen der Rufnummern von Notruf- oder Servicestellen erreichen, die in Wirklichkeit regional unterschiedliche Rufnummer haben. Durch das erfindungsgemäße Verfahren des Gesprächsaufbaus läßt sich eine Datenaustauschprozedur vorschalten, die letztlich zur gewünschten Rufnummer führt, die dem Teilnehmer selbst persönlich gar nicht bekannt sein muß. Es reicht völlig aus, wenn er die Nummer einer übergeordneten Zentrale anwählt und die erforderlichen Daten über den Datenkanal übermittelt bekommt. In Weiterbildung der Erfindung kann es vorgesehen sein, örtliche Rufnummern von Notruf- oder Servicestellen, die von einer Zentrale in der beschriebenen Weise erhalten wurden, für eine spätere erneute Nutzung im Kontrollrechner zu speichern, um den Zugriff zu beschleunigen. Damit die Funktion des Systems im Falle des Rückgriffs auf eine veraltete gespeicherte Rufnummer gewährleistet bleibt, sollte eine programmtechnische Vorkehrung im Kontrollrechner getroffen sein, daß im Falle einer nicht zustande kommenden Verbindung automatisch die übergeordnete Zentrale zur Abfrage der aktuellen Rufnummer angewählt wird.

## Patentansprüche

1. Verfahren zur Herstellung einer Sprachverbindung zwischen einem Teilnehmer eines Mobilfunknetzes, insbesondere einem Teilnehmer mit eingeschränkter Subskription und einem Gesprächspartner auf dem Sprachkanal eines mobilen Endgerätes (5), wobei das Endgerät über einen zusätzlichen Datenkanal (4) für die Übermittlung digitaler Daten verfügt oder an ein Zusatzgerät mit einem solchen Datenkanal angeschlossen ist, wobei die für den Gesprächsaufbau erforderlichen Daten über den zusätzlichen Datenkanal (4) übermittelt werden,
**dadurch gekennzeichnet,**
**dass** der Gesprächsaufbau über einen Kontrollrechner (6), der mit dem Endgerät (5) verbunden ist, erfolgt, indem eine über den Datenkanal (4) erhaltene Rufnummer vom Kontrollrechner (6) selbsttätig angewählt wird.

2. Verfahren nach Anspruch 1,
**dadurch gekennzeichnet,**
**dass** als separater Datenkanal der SMS-Kanal für den Versand von Kurznachrichten des Mobilfunknetzes verwendet wird.

3. Verfahren nach Anspruch 1 oder 2,
**dadurch gekennzeichnet,**
**dass** die Anwahl der über den Datenkanal erhaltenen Rufnummer erst dann erfolgt, wenn der Teilnehmer eine entsprechende Bestätigung für das Anwählen an den Kontrollrechner gegeben hat.

4. Verfahren nach einem der Ansprüche 1 bis 3,
**dadurch gekennzeichnet,**
**dass** der Teilnehmer über den Sprachkanal seinen Wunsch zur Herstellung einer Gesprächsverbindung an eine als Telefonnummemauskunftsstelle arbeitende Servicezentrale übermittelt und diese als Antwort die für den Gesprächsaufbau erforderlichen Daten über den Datenkanal an den Kontrollrechner zurückschickt.

5. Verfahren nach Anspruch 1,
**dadurch gekennzeichnet,**
**dass** die Dateneingabe über mindestens eine Taste (1) am Mobilfunktelefon (5) erfolgt, und dass ein Kontrollrechner (6) vorgesehen ist, der eine Schnittstelle zum Mobilfunktelefon (5) aufweist, die eingerichtet ist zur Erkennung von Tastatureingaben des Mobilfunktelefons (5) und/oder zur Auslösung der Wählfunktion des Mobilfunktelefons (5), wobei der Kontrollrechner auch eine Schnittstelle zum separaten Datenkanal (4) besitzt.

6. Verfahren nach Anspruch 5,
**dadurch gekennzeichnet,**
**dass** der Kontrollrechner (6) Bestandteil des Mobilfunktelefons (5) ist.

7. Verfahren nach einem der Ansprüche 5 bis 6,
**dadurch gekennzeichnet,**
**dass** der Datenkanal (4) für den Versand von Kurzmitteilungen der SMS-Kanal des Mobilfunknetzes ist.

8. Verfahren nach einem der Ansprüche 5 bis 6,
**dadurch gekennzeichnet,**
**dass** der Datenkanal (4) ein unidirektionaler Datenkanal eines Funknetzes ist.

9. Verfahren nach einem der Ansprüche 5 bis 8,
**dadurch gekennzeichnet,**
**dass** der Kontrollrechner (6) datentechnisch mit einer in einem Fahrzeug mitgeführten Navigationseinrichtung verbunden ist.

## Claims

1. Method of establishing a voice link between a user of a mobile phone network, in particular a user with a restricted subscription, and a conversation partner on the telephone channel of a mobile terminal (5), the terminal having an additional data channel (4) for the transmission of digital data or being linked to an attachment which has a data channel of this type, the data required for the call setup being transmitted via the additional data channel (4),
**characterised in that**
the call setup is effected, via a control computer (6) which is linked to the terminal (5), **in that** a dial number received through the data channel (4) is automatically dialled by the control computer (6).

2. Method as in Claim 1,
**characterised in that**
the SMS channel of the mobile phone network for sending text messages is used as the separate data channel.

3. Method as in Claim 1 or 2,
**characterised in that**
the dial number received through the data channel is not dialled until the user has sent an appropriate confirmation for the dialling process to the control computer.

4. Method as in one of Claims 1 to 3,
**characterised in that**
the user sends his wish to establish a voice link to a service centre which operates as a telephone number information centre, and the latter sends the data required for call setup, in the form of a reply, back to the control computer through the data channel.

5. Method as in Claim 1,
**characterised in that**
the input of data is effected by at least one key (1) on the mobile phone (5), and **in that** there is a control computer (6) which has an interface to the mobile phone (5) that is set up to recognise keypad inputs from the mobile phone (5) and/or to activate the dialling function of the mobile phone (5), the control computer also having an interface to the separate data channel (4).

6. Method as in Claim 5,
**characterised in that**
the control computer (6) is a component of the mobile phone (5).

7. Method as in one of Claims 5 to 6,
**characterised in that**
the data channel (4) for sending text messages is the SMS channel of the mobile radio communications network.

8. Method as in one of Claims 5 to 6,
**characterised in that**
the data channel (4) is a unidirectional data channel of a radio communications network.

9. Method as in one of Claims 5 to 8,
**characterised in that**
the control computer (6) has a data technology link to a navigation device carried in a vehicle.

## Revendications

1. Procédé pour établir une communication vocale entre un abonné à un réseau de radiotéléphonie mobile, notamment un abonné disposant d'un accès limité, et un interlocuteur sur le canal de conversation d'un terminal mobile (5), le terminal disposant d'un canal de données (47) supplémentaire pour la transmission d'informations numériques ou étant raccordé sur un appareil auxiliaire disposant d'un tel canal de données, les informations requises pour l'établissement de la communication étant transmises par l'intermédiaire du canal de données supplémentaire (4),
**caractérisé en ce que** la communication vocale est établie par l'intermédiaire d'un ordinateur de contrôle (6) relié au terminal (5), par composition automatique par un ordinateur de contrôle (6) d'un numéro d'appel obtenu par l'intermédiaire du canal de données (4).

2. Procédé selon la revendication 1,
**caractérisé en ce que** le canal SMS du réseau de radiotéléphonie mobile destiné à envoyer des mini-messages est utilisé en tant que canal de données séparé.

3. Procédé selon l'une quelconque des revendications 1 ou 2,
**caractérisé en ce que** la composition du numéro obtenu par l'intermédiaire du canal de données n'a lieu qu'une fois que l'abonné a donné une confirmation correspondante à l'ordinateur de contrôle, pour la numérotation.

4. Procédé selon l'une quelconque des revendications 1 à 3,
**caractérisé en ce que**, par l'intermédiaire du canal de conversation, l'abonné transmet son souhait d'établir une communication vocale à un central de service faisant office de service de renseignements téléphoniques et **en ce que**, en réponse, ce dernier renvoie à l'ordinateur de contrôle par l'intermédiaire du canal de données les informations nécessaires pour établir la communication vocale.

5. Procédé selon la revendication 1,
**caractérisé en ce que** la saisie de données a lieu par l'intermédiaire d'au moins une touche (1) sur le téléphone mobile et **en ce qu'**un ordinateur de contrôle (6), muni d'une interface vers le téléphone mobile (5) qui est installée pour l'identification de saisies par l'intermédiaire du clavier du téléphone mobile (5) et/ou pour le déclenchement de la fonction de composition du téléphone mobile (5) est prévu, l'ordinateur de contrôle étant également muni d'une interface vers le canal de données séparé (4).

6. Procédé selon la revendication 5,
**caractérisé en ce que** l'ordinateur de contrôle (6) est un élément du téléphone mobile (5).

7. Procédé selon l'une quelconque des revendications 5 ou 6,
**caractérisé en ce que** le canal de données (4) pour l'envoi de mini-messages est le canal SMS du réseau de radiotéléphonie mobile.

8. Procédé selon l'une quelconque des revendications 5 ou 6,
**caractérisé en ce que** le canal de données (4) est un canal de données unidirectionnel d'un réseau de radiocommunication.

9. Procédé selon l'une quelconque des revendications 5 à 8,
**caractérisé en ce que** l'ordinateur de contrôle (6) est relié du point de vue technique de l'information à un système de navigation embarqué dans un véhicule.
